# EUROPÄISCHE PATENTSCHRIFT

(11) **EP 4 314 587 B1**
(45) Veröffentlichungstag und Bekanntmachung des Hinweises auf die Patenterteilung: **19.11.2025**
(21) Anmeldenummer: 22711050.9
(22) Anmeldetag: 08.03.2022
(51) Int. Cl.: F16D 25/10, F16D 25/0638, F16D 13/70, B60K 6/387

(54) **MEHRFACHLAMELLENKUPPLUNGSANORDNUNG MIT STÜTZSCHEIBE, INSBESONDERE DREIFACHLAMELLENKUPPLUNG**
ASSEMBLY WITH SEVERAL MULTIPLE LAMELLAE CLUTCHES WITH A SUPPORT DISC, IN PARTICULAR AN ASSEMBLY WITH THREE MULTIPLE LAMELLAE CLUTCHES
ENSEMBLE AVEC PLUSIEURS EMBRAYAGES À LAMELLES MULTIPLES AVEC UN DISQUE DE SUPPORT, NOTAMMENT UN ENSEMBLE AVEC TROIS EMBRAYAGES À LAMELLES MULTIPLES

(30) Priorität: 29.03.2021 DE 102021203149; 06.07.2021 DE 102021207077
(43) Veröffentlichungstag der Anmeldung: 07.02.2024
(73) Patentinhaber: Magna PT B.V. & Co. KGaA, 74199 Untergruppenbach (DE)
(72) Erfinder: GREMPLINI, Hansi, 74379 Ingersheim (DE); COKDOGRU, Inan, 74924 Neckarbischofsheim (DE)
(74) Vertreter: Euler, Matthias
(86) Internationale Anmeldenummer: PCT/EP2022/055845
(87) Internationale Veröffentlichungsnummer: WO 2022/207251

(56) Entgegenhaltungen:
- EP-A1- 1 726 847
- CN-A- 109 322 940
- DE-A1- 102016 211 888
- DE-A1- 102017 206 215

## Beschreibung

Die vorliegende Erfindung betrifft eine Mehrfachlamellenkupplungsanordnung mit mindesten zwei Reibkupplungen, die radial versetzt zueinander angeordnete Lamellenpakte auf Lamellenträgern aufweisen, mit Kolben zur Aktuierung der Reibkupplungen, wobei eine Stützscheibe zwischen dem Kupplungsabtrieb einer Kupplung und dem Kupplungseingang einer anderen Kuppelung angeordnet ist, die als Stütze beim Betätigen mindestens einer der Kupplungen dient

### Stand der Technik

Doppelkupplungen für einen Antriebsstrang sind beispielsweise aus der EP 2 905 492 B1 bekannt. Solche Kupplungsanordnungen dienen in Kraftfahrzeugantriebssträngen dazu, einen Antriebsmotor wie einen Verbrennungsmotor mit einem Getriebe wie einem Stufengetriebe zu verbinden. Die darin enthaltene Kupplung dient beispielsweise zum Anfahren und/oder zum Unterbrechen des Leistungsflusses, sofern in dem Getriebe eine Gangstufe gewechselt werden soll. Bei nasslaufenden Reibkupplungen ist es bekannt, diese fluidisch zu betätigen. Hierzu ist es ebenfalls bekannt, eine Drehdurchführung zwischen einem Gehäusezapfen und einem Nabenglied vorzusehen, wobei über die Drehdurchführung Fluid zum Kühlen und zur Betätigung der Kupplung bereitgestellt wird.

Bei einem solchen offenen System versucht man, die teilweise störenden Fliehkrafteinflüsse auf rotierende Betätigungskolben, nämlich Druckerhöhungen aufgrund des bei Rotation aufgrund der Fliehkraft nach außen geschleuderten zur Betätigung der Kupplung vorgesehenen Kühlöls, durch die Bereitstellung entsprechender Kompensationsräume auszugleichen, in denen ein entsprechender Gegendruck erzeugt wird. Der Betätigungskolben ist dann als Folge beidseitig von Ölräumen umgeben, was zu einem guten Fliehölausgleich führt. Die Ölräume sind dabei Druckölräume und Fliehölausgleichsräume, wobei letzterer von Fliehölausgleichskolben gebildet wird. Als Fliehöl wird der Teil des Kühlöl bezeichnet, der durch Fliehkraft bewegt wird.

Solche Doppelkupplungen werden auch für die hybridische Antriebssystem in einem Doppelkupplungsgetriebe verwendet. So ist beispielsweise aus der DE 10 2010 004 711 B1 ein Design mit einer an einem der beiden Teilgetriebe angebundenen elektrischen Maschine bekannt.

Die Anbindung der elektrischen Maschine an eine der Teilgetriebe, dem zweiten Teilgetriebe TG2 mit den Gangstufen 2/4/6 oder dem ersten Teilgetriebe TG1 mit den Gangstufen 1/3/5/7, erlaubt keine Schaltung im rein elektrischen Betrieb ohne Zugkraftunterbrechung. Eine Schaltung im rein elektrischen Betrieb kann in einem 2,5 Hybridtyp entweder mit Zugkraftunterbrechung oder über ein Stützmoment des Verbrennungsmotors erfolgen. Damit kann die Vermeidung von Abgasen nicht sichergestellt werden, was für den Messzyklus eines Hybridfahrzeugs nachteilig ist.

In einem P2 Hybridtyp treten die Probleme nicht auf, allerdings erfordert die P2 Konfiguration eine weitere Kupplung K0 zwischen Verbrennungsmotor und elektrischer Maschine. Allerdings ist der Bauraum begrenzt, so dass eine Dreifachlamellenkupplung zum Einsatz kommt. Alle verwendeten Bauteile müssen für den geringen Bauraum optimiert sein, wobei auch die Herstellungs- und/oder Montagekosten eine Rolle spielen.

Eine dreifache Kupplung ist beispielsweise aus der DE 10 2019 104 073 A1 bekannt.

EP 1 726 847 A1 offenbart eine Mehrfachlamellenkupplungsanordnung mit zwei Reibkupplungen, die radial versetzt zueinander angeordnete Lamellen auf Lamellenträgern aufweisen, mit Kolben zur Aktuierung der Reibkupplungen, wobei eine Stützscheibe zwischen dem Kupplungsabtrieb einer Kupplung und dem Kupplungseingang einer anderen Kupplung angeordnet ist. Die Stützscheibe ist mittels eines Radialnadellagers radial gelagert und dient als Stütze beim Betätigen einer der Kupplungen und ist ein einteiliges Blechteil.

DE 10 2017 206 215 A1 offenbart eine Mehrfachlamellenkupplungsanordnung als Dreifachlamellenkupplung mit drei Reibungskupplungen, wobei zwei Reibkupplungen radial versetzt zueinander angeordnete Lamellenpakte auf Lamellenträgern aufweisen, mit Kolben zur Aktuierung der Reibkupplungen, wobei eine Stützscheibe zwischen einerseits den beiden Kupplungsabtrieben zweier Kupplungen und andererseits dem Kupplungseingang einer dritten Kupplung angeordnet ist.

Die Stützscheibe dient als Stütze beim Betätigen einer der Kupplungen, wobei zwei der Kupplungen eine gemeinsame Stützscheibe aufweisen.

Es ist Aufgabe der Erfindung eine Mehrfachlamellenkupplungsanordnung insbesondere einen Dreifachlamellenkupplung bereitzustellen, bei der eine optimierte Stützscheibe zwischen Kupplungsabtrieb einer Kupplung und Kupplungseingang einer weiteren Kupplung zum Einsatz kommt.

### Beschreibung der Erfindung

Die Aufgabe wird gelöst mit einer Mehrfachlamellenkupplungsanordnung mit mindesten zwei Reibkupplungen die radial versetzt zueinander angeordnete Lamellenpakte auf Lamellenträgern aufweisen, mit Kolben zur Aktuierung der Reibkupplungen, wobei eine Stützscheibe zwischen dem Kupplungsabtrieb einer Kupplung und dem Kupplungseingang der anderen Kuppelung angeordnet ist, die als Stütze beim Betätigen mindestens einer der Kupplungen dient, dadurch gekennzeichnet, dass die Stützscheibe ein mindestens einteiliges Blechteil ist.

Ein Blech ist ein Walzwerkserzeugnis aus Metall, das als Tafel ausgeliefert wird und dessen Breite und Länge sehr viel größer als seine Dicke sind. Durch ein entsprechendes Design kann ein Blechbauteil ein gegossenes oder gepresstes Bauteil ersetzen. Der Kostenvorteil ist dabei enorm.

Erfindungsgemäß besteht die Stützscheibe aus einem radial verlaufenden Teil und zwei Flügel, wobei die jeweils einer der Flügel an dem Lamellenpaket jeweils einer der Kupplungen anliegt.

Die Flügel der Stützscheibe u-förmig oder L-förmig ausgebildet.

Die Stützscheibe besteht aus einen radial sich erstreckenden Teil und einem getrennten Flügelbauteil mit zwei Flügeln.

Die Stützscheibe besteht alternativ aus einen radial sich erstreckenden Teil und zwei getrennten Flügelbauteil, die oberhalb und unterhalb des Lamellenträgers angebracht sind.

Die Lamellenpakete sind über mindestens eine Unterlegscheibe in Kontakt mit der Stützscheibe.

Mehrfachlamellenkupplungsanordnung ist eine Dreifachlamellenkupplung mit einer ersten, einer zweiten und einer dritten Reibkupplung, die radial versetzt zueinander angeordnete Lamellenpakte auf Lamellenträgern aufweisen, mit einem ersten Kolben, einem zweiten Kolben und einem dritten Kolben zur Aktuierung der ersten, zweiten und dritten Reibkupplung, wobei ein erster, ein zweiter und ein dritter Fliehölausgleichskolben zusammen mit jeweils dem ersten, dem zweiten und dem dritten Kolben Fliehölausgleichsräume bildet, wobei zwei der Kupplungen eine gemeinsame Stützscheibe aufweisen.

Radial versetzt zueinander bedeutet, dass man, wenn man einem Strahl weg von der Mittenachse A folgt, nacheinander auf die Fliehölausgleichsräume stößt, die auch in einem radialen Abstand voneinander angeordnet sind.

Dadurch ist ein sehr kompakter Aufbau bei minimaler axialer Ausdehnung gegeben.

### Beschreibung der Figuren

Figur 1 zeigt eine erfindungsgemäße Ausführungsform mit gemeinsamer Antriebslamellenträger für die Kupplungen K0 und K1,
Figur 2 zeigt eine nicht erfindungsgemäße Ausführungsform mit gemeinsamer Antriebslamellenträger für Kupplungen K1 und K2,
Figur 3 zeigt eine Ausführung mit einer Öldurchführung in der sich drehende Hauptnabe im Kupplungsgehäuse,
Figur 4 zeigt einen nicht erfindungsgemäßen modularen Aufbau,
Figur 5 zeigt eine weitere Ausführungsform,
Figuren 6 bis 9 zeigen Ausführungsformen der Stützscheibe.

Alle Ausführungsformen sind konzentrische Dreifachlamellenkupplungen mit axial kurzer Bauweise und einer kostenoptimierten Struktur durch Verwendung von Blecheinbauten.

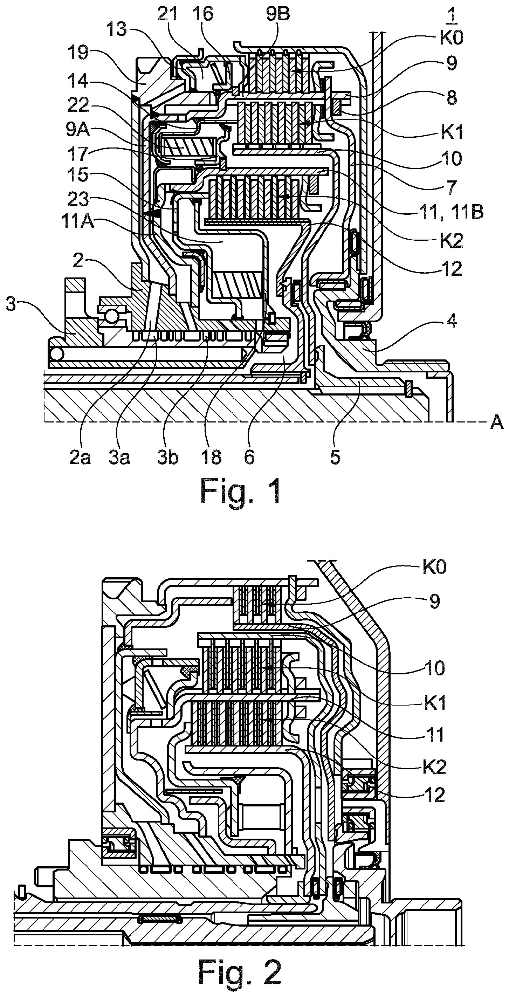

Figur 1 ist einen Dreifachlamellenkupplung 1 mit einer Kupplung K2, einer Kupplung K1 und einer Kupplung K0, die mit konzentrisch angeordneten Lamellenpaketen von innen nach außen angeordnet sind.

Die Lamellenpakte der drei Kupplungen K0, K1, K2 weisen in axialer Richtung gesehen keinen Versatz zueinander auf oder sind nur mit einem geringen Versatz zueinander verbaut.

Die Dreifachlamellenkupplung 1 weist einen Hauptnabe 2, die Öldurchführungen 2a aufweist. Die Ölzufuhr erfolgt über eine Drehdurchführung 3, die Öldurchführungen 3a aufweist, die von Kolbenringen 3b gedichtet werden.

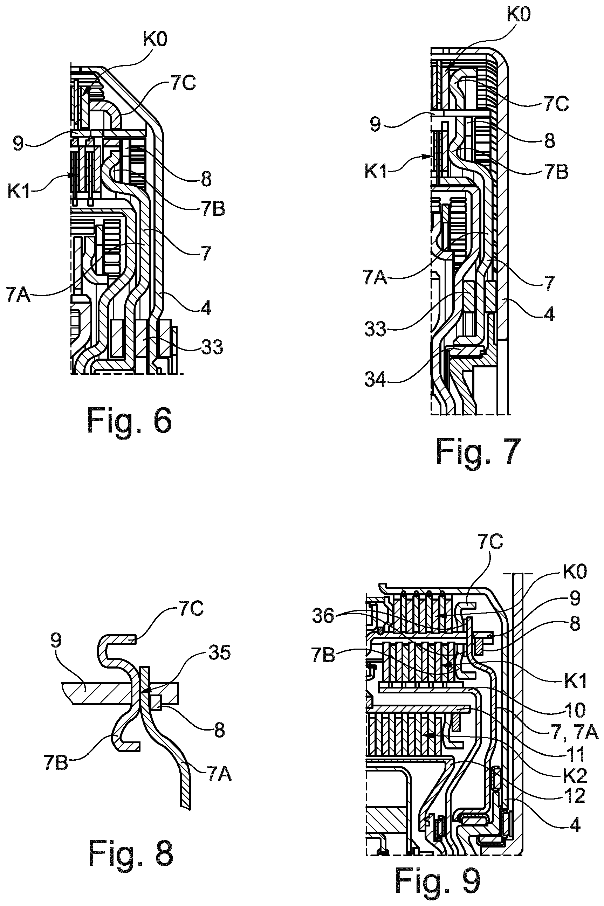

Eine Eingangsnabe 4 umgreift eine erste Ausgangsnabe 5 und eine zweite Ausgangsnabe 6. An der Eingangsnabe 4 ist eine Stützscheibe 7 angebracht, die über eine Abstützung 8 mit einem gemeinsamen Lamellenträger 9 für die Kupplungen K0 und K1 verbunden ist. Diese Stützscheibe 7 ist dabei in Figur 9 nochmals herausgestellt.

Die Abstützung 8 und die Stützscheibe 7 ist in diesem Ausführungsbeispiel nach Fig. 9 mehrteilig aufgebaut.

Der gemeinsame Lamellenträger 9 dient als Innenlamellenträger der Kupplung K0 und als Außenlamellenträger der Kupplung K1. Der Innenlamellenträger 10 der Kupplung K1 ist mit der ersten Ausgangsnabe 5 verbunden. Die Kupplung K2 weist einen Außenlamellenträger 11 und einen Innenlamellenträger 12 auf, wobei der Innenlamellenträger 12 mit der zweiten Ausgangsnabe 6 in Verbindung steht.

Betätigt werden die drei Kupplungen K0, K1, K2 mit Hilfe eines ersten Kolbens 13, eines zweiten Kolbens 14 und eines dritten Kolbens 15. Alle drei Kolben 13, 14, 15 sind auf derselben Seite der Dreifachlamellenkupplung 1 angeordnet, die der Eingangsnabe 4 gegenüberliegt. Die Kolben 14, 15 sind dabei radial übereinander versetzt und liegen innerhalb von Korbabschnitten 9A, 11A der Lamellenträger 9, 11, die jeweils mit der Hauptnabe 2 verbunden sind. Die Abschnitte 9A und 11A verlaufen über einen großen radialen Bereich parallel zueinander, bis sie in rechtwinklig davon verlaufende Bereiche 9B und 11B der Lamellenträger münden. Ein Kolbenträger 19 für den ersten Kolben 13 verläuft ebenfalls parallel zu den radiale verlaufenden Abschnitten 9A und 11A der Lamellenträger.

Weiterhin weist die Dreifachlamellenkupplung 1 noch Fliehölausgleichskolben auf, einen ersten Fliehölausgleichskolben 16, einen zweiten Fliehölausgleichskolben 17 und einen dritten Fliehölausgleichskolben 18.

Der erste Kolben 13 und der erste Fliehölausgleichskolben 16 bilden einen ersten Fliehölausgleichsraum 21.

Der zweite Kolben 14 und der zweite Fliehölausgleichskolben 17 bilden einen zweiten Fliehölausgleichsraum 22.

Der dritte Kolben 15 und der dritte Fliehölausgleichskolben 18 bilden einen dritten Fliehölausgleichsraum 23.

Die Fliehölausgleichsräume 21, 22, 23 sind konzentrisch zueinander mit einem radialen Abstand zueinander angeordnet, wobei alle drei Fliehölausgleichsräumen 21, 22, 23 miteinander verbunden sind. Der radiale Versatz der Fliehölausgleichsräume, der auch keinen radialen Überlapp der Fliehölausgleichsräume zulässt, ermöglicht eine kompakte Bauweise in axialer Richtung.

Die äußeren Fliehölausgleichsräume werden über den dritten Fliehölausgleichsraum 23 befüllt, der über eine Öldurchführung 24 im dritten Kolben 15 sowie einen Öldurchführung 25 im Außenlamellenträger 12 der Kupplung K2 den zweiten Fliehölausgleichsraum 22 füllt. Der zweite Fliehölausgleichsraum 22 befüllt über einen Kanal 26 zwischen den Bauteilen des zweiten Kolbens 14 und eine Öffnung 27 im gemeinsamen Lamellenträger 9 den ersten Fliehölausgleichsraum 21.

Damit erhält man einen durchgängigen Fliehölstrom von der Hauptnabe 2 aus bis zum ersten Fliehölausgleichsraum 21.

In der Figur 2 wird eine nicht erfindungsgemäße Lösung vorgestellt, die sich dadurch unterscheidet, dass ein gemeinsamer Lamellenträger 11 die beiden Kupplungen K1 und K2 trägt und die Kupplung K0 dagegen separat mit eigenen Innenlamellenträger 9 und Außenlamellenträger geführt ist.

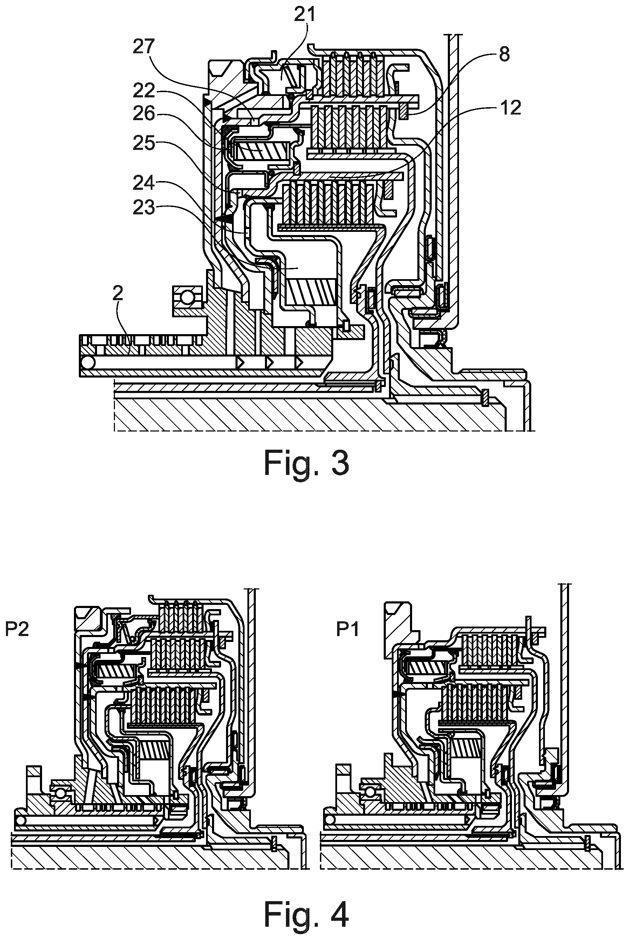

Figur 3 zeigt eine Ausführungsform, die im Wesentlichen der Kupplungsanordnung und Kühlölverläufe der Figur 1 entspricht.

Im Unterschied zur Lösung der Figur 1 ist die radiale Stützscheibe 7 nicht mehrteilig, sondern einteilig ausgeführt, was Kosten reduziert und in Figur 7 nochmals im Detail dargestellt ist.

Als Weiteren ist die Drehdurchführung 3 zur Öldurchführung, durch die sich drehende Hauptnabe 2 im Kupplungsgehäuse ersetzt worden. Der Wegfall der Drehdurchführung 3 als separates Bauteil reduziert Kosten.

Die Dreifachlamellenkupplung 1 ist zur Ausgestaltung eines P2 Hybridantriebs ausgelegt und ermöglicht es der elektrischen Maschine, die ausgangsseitig von der der Kupplung K0 aber vor den Kupplungen des Doppelkupplungsgetriebes eingreift, zugkraftunterbrechungsfrei mit dem Doppelkupplungsgetriebe zu schalten.

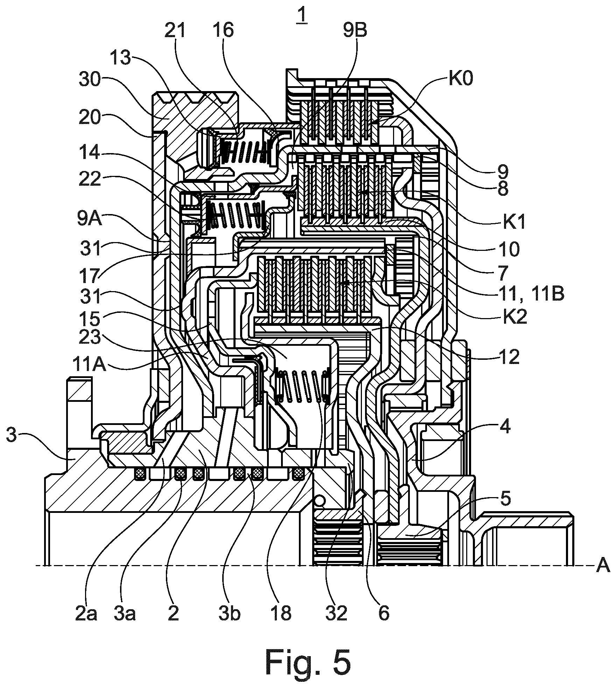

Figur 5 zeigt eine weitere Ausführungsform, in der die verwendeten Blechteile weiter optimiert sind.

Die Hauptnabe 2 ist als Drehteil ausgelegt und trägt unter anderen die Lamellenträger 9 und 11. Auch eine Zahnkranzträgerplatte 20 ist direkt mit der Hauptnabe 2 verbunden. Die Hauptnabe 2 ist mit einem möglichst geringen Durchmesser ausgelegt, um geringe Schweißdurchmesser für die zu verschweißenden Komponenten zu ermöglichen. Der Durchmesser der Schweißnähte und somit der Hauptnabe 2 sind dabei für die berechnete Belastung vorgegeben.

Die Zahnkranzträgerplatte 20 ist auf jeden Fall mit der Hauptnabe 2 verschweißt, während die Lamellenträger 9, 11 auch mit einem Presssitz verbunden sein können.

Auf der von der Hauptnabe wegweisenden Außenradius der Zahnkranzträgerplatte 20 sitzt ein Zahnkranz 30, das zur Anbindung der elektrischen Maschine des Antriebsstrangs gehört.

Die Blechstanzsteile der Lamellenträger 9, 11 sowie die Zahnkranzträgerplatte 20 sind gegebenenfalls zu flexibel, um dem beaufschlagten Anpressdruck standzuhalten. Daher ist eine Steifigkeitserhöhung wünschenswert. Diese Steifigkeitserhöhung erreicht man mit einer Verschweißung 31 zwischen Segmenten wie der Zahnkranzträgerplatte 20 mit dem Lamellenträger 9 und dem Lamellenträger 9 mit dem Lamellenträger 11. Diese Versteifungen durch die Verschweißung 31 erfolgt im Bereich, der sich von der Hauptnabe 2 aus radial nach außen erstreckt, in dem die Segmente parallel zueinander verlaufen.

Je nach Auslegung der Dreifachlamellenkupplung 1 erfolgen die Verschweißungen beide oder alternativ nur einen der beiden Verschweißungen 31.

Eine weitere Verbesserung ergibt sich durch die Ausgestaltung des Hauptnabe 2 als Drehteil. Die Hauptnabe 2 ist ungehärtetes Material, das einfach zu bearbeiten ist. Diese Hauptnabe mündet in Richtung auf die Ausgangsnaben 5,6, in einer Kante 32, die im Schnittbild als Nase wiedergegeben ist.

Die Kante ist einstückig mit der Hauptnabe hergestellt und begrenzt den darunterliegenden Stauraum des Fliehöls und dient als Fliehölkante.

Wie in der Figur 4 dargestellt ist die Dreifachlamellenkupplung 1 so aufgebaut, dass auch die äußerste Kupplung K0 weggelassen werden kann und man damit einen P1 Hybridantrieb realisieren kann. Bei der P1-Auslegung sitzt der elektrische Motor noch vor Getriebe auf der Kurbelwelle, entspricht also funktional weitgehend der getriebeseitigen P2-Anordnung auf der Getriebeeingangswelle.

Der Bauraum bleibt dabei bei allem Ausführungsformen der Erfindung gleich, der Gesamtaufbau ebenfalls, es werden nur die der Kupplung K0 zugeordneten Bauteile weggelassen.

Die Stützscheibe 7 ist als Blechteil ausgelegt und verläuft zwischen dem Kupplungsabtrieb der Kupplung K1 mit der Ausgangsnabe 5 und dem Kupplungseingang der Kupplung K0 mit Anbindung an die Eingangsnabe 4. Die Stützscheibe 7 weist einen sich radial erstreckenden Teil 7A auf, der in einem ersten Flügel 7B mündet. Ein zweiter Flügel 7C streckt sich oberhalb des Lamellenträger 9 der Kupplungen K0 und K1.

Die beiden Flügel 7B, 7C dienen zur Abstützung der jeweiligen Kupplungspakete der beiden Kupplungen, die Lamellen auf einem Lamellenträger besitzen.

Die Stützscheibe 7 ist axial über Axiallager 33 gegen den Kupplungsabtrieb der Kupplung K1 und gegen den Kupplungseingang der Kupplung K0 abgestützt. Radial ist die Stützscheibe 7 indirekt über die Eingangsnabe 4 und Radiallagern 34 und dem Gehäuse abgestützt.

Figur 6 zeigt ein Ausführungsbeispiel mit einer einteiligen Stützscheibe 7. Der erste Flügel 7B zeigt eine u-förmige Ausbildung, deren geschlossenes Ende auf die Lamellen des Lamellenpaket der Kupplung K1 gerichtet ist. Der zweite Flügel 7C ist L-förmig ausgebildet, wobei die Stützscheibe 7 mit dem offenen Ende auf die Endlamelle der Kupplung K0 gerichtet. Die Stützscheibe 7 durchdringt den Lamellenträger 9.

Um die Lamellenpakete der beiden Kupplung K1, K0 optimal zu kontaktieren und zu stützen müssen Unterlegscheiben 36 in verschiedenen Stärken, sogenannte Shims eingesetzt werden, um ein vorhandenes Spiel zu kompensieren.

Um die Situation zu verbessern sind auch wahlweise selektive Stahllamellen vorgesehen und/oder dickerer Endlamellen, die die Kräfte besser übertragen können.

Figur 7 zeigt ebenfalls eine einteilige Stützscheibe 7, wobei bei dieser Ausführungsform der zweite Flügel 7C eine andere Ausrichtung als die Ausführung nach Figur 6. Der Flügel 7C ist dabei auch u-förmig ausgelegt und liegt mit der geschlossenen Seite des U an den Lamellen der Kupplung K0 an.

Figur 8 zeigt eine Ausführungsform, bei der die Stützscheibe 7 zweiteilig gestaltet ist. dein sind die Flügel 7Bund 7C als getrenntes Bauteil auf dem Lamellenträger 9 aufgesteckt und in einem Bereich 35 mit der sich radial erstreckenden Bereich 7A der Stützscheibe 7 verbunden.

Auch in dieser Ausführungsform sind wahlweise selektive Stahllamellen vorgesehen und/oder dickerer Endlamellen, die die Kräfte besser übertragen können.

Figur 9 zeigt den mehrteiligen Ansatz für einen Stützscheibe 7. Dabei ist der radiale Bereich 7A der Stützscheibe 7 von den beiden einzelnen Flügel 7B und 7C unabhängig an dem Lamellenträger 9 montiert. Die beiden Flügel 7B, 7C sind ebenfalls getrennte Bauteile und am Lamellenträger 9 befestigt.

Um das Spiel an den beiden Kupplungen K1, K0 zu verbessern sind getrennte Unterlegscheiben 36 vorhanden, die sich oberhalb und unterhalb des Lamellenträgers 9 erstrecken. Damit wird ein eventuell vorhandenes Spiel kompensiert.

### Bezugszeichen

1 Dreifachlamellenkupplung
2 Hauptnabe
2a, 3a, 24, 25 Öldurchführungen
3 Drehdurchführung
3b Kolbenringe
4 Eingangsnabe
5, 6 Ausgangsnabe
7 Stützscheibe
7A radial erstreckender Teil
7B, 7C Flügel
8 Abstützung
9, 10, 11, 12 Lamellenträger
9A, 11A Korbabschnitt
9B, 11B rechtwinklig verlaufende Bereiche der Lamellenträger
13, 14, 15 Kolben
16, 17, 18 Fliehölausgleichskolben
19 Kolbenträger
20 Zahnkranzträgerplatte
21, 22, 23 Fliehölausgleichsräume
26 Kanal
27 Öffnung
30 Zahnkranz
31 Verschweißungen
32 Nase
33 Axiallager
34 Radiallager
35 Bereich
36 Unterlegscheiben
K0, K1, K2 Reibkupplung
A Achse

## Patentansprüche

1. Mehrfachlamellenkupplungsanordnung mit drei Reibkupplungen (K1, K2, K0) die radial versetzt zueinander angeordnete Lamellenpakte auf Lamellenträgern (9, 10, 11, 12) aufweisen, mit Kolben (13, 14, 15) zur Aktuierung der Reibkupplungen, wobei eine Stützscheibe (7) zwischen dem Kupplungsabtrieb einer Kupplung (K1) und dem Kupplungseingang einer anderen Kuppelung (K0) angeordnet ist, die als Stütze beim Betätigen mindestens einer der Kupplungen (K1, K2, K0) dient,
**dadurch gekennzeichnet, dass**
die Stützscheibe (7) ein mindestens einteiliges Blechteil ist und aus einem radial verlaufenden Teil (7A) und zwei Flügeln (7B,7C) besteht, wobei jeweils einer der Flügel (7A, 7B) an dem Lamellenpaket jeweils einer der Kupplungen (K1, K2, K0) anliegt.

2. Mehrfachlamellenkupplungsanordnung nach Anspruch 1, **dadurch gekennzeichnet, dass** die Flügel (7B, 7C) der Stützscheibe (7) u-förmig oder L-förmig ausgebildet sind.

3. Mehrfachlamellenkupplungsanordnung nach einem der vorhergehenden Ansprüche, **dadurch gekennzeichnet, dass** die Stützscheibe (7) aus einen radial sich erstreckenden Teil (7A) und einem getrennten Flügelbauteil mit zwei Flügeln (7B, 7C) besteht.

4. Mehrfachlamellenkupplungsanordnung nach Anspruch 1 oder 2, **dadurch gekennzeichnet, dass** die Stützscheibe (7) aus einen radial sich erstreckenden Teil (7A) und zwei getrennten Flügelbauteil (7B, 7C) besteht, die oberhalb und unterhalb des Lamellenträgers (9) angebracht sind.

5. Mehrfachlamellenkupplungsanordnung nach einem der vorhergehenden Ansprüche, **dadurch gekennzeichnet, dass** die Lamellenpakete über mindestens eine Unterlegscheibe (36) in Kontakt mit der Stützscheibe (7) sind.

6. Mehrfachlamellenkupplungsanordnung als Dreifachlamellenkupplung (1) nach einem der vorhergehenden Ansprüche mit einer ersten, einer zweiten und einer dritten Reibkupplung (K0, K1, K2), die radial versetzt zueinander angeordnete Lamellenpakte auf Lamellenträgern (9, 10, 11, 12) aufweisen, mit einem ersten Kolben (13), einem zweiten Kolben (14) und einem dritten Kolben (15) zur Aktuierung der ersten, zweiten und dritten Reibkupplung (K0, K1, K2), wobei ein erster, ein zweiter und ein dritter Fliehölausgleichskolben (16, 17, 18) zusammen mit jeweils dem ersten, dem zweiten und dem dritten Kolben (13, 14, 15) Fliehölausgleichsräume (21, 22, 23) bildet, wobei zwei der Kupplungen eine gemeinsame Stützscheibe (7) aufweisen.

## Claims

1. Multiple disc clutch arrangement having three friction clutches (K1, K2, K0) which have disc packs on disc carriers (9, 10, 11, 12), which disc packs are arranged radially offset from one another, having pistons (13, 14, 15) for actuating the friction clutches, wherein a support disc (7) is arranged between the clutch output of one clutch (K1) and the clutch input of another clutch (K0) and serves as a support when at least one of the clutches (K1, K2, K0) is actuated,
**characterized in that**
the support disc (7) is an at least one-piece sheet metal part and consists of a radially extending part (7A) and two wings (7B, 7C), wherein in each case one of the wings (7A, 7B) abuts against the disc pack of in each case one of the clutches (K1, K2, K0).

2. Multiple disc clutch arrangement according to Claim 1, **characterized in that** the wings (7B, 7C) of the support disc (7) are of U-shaped or L-shaped form.

3. Multiple disc clutch arrangement according to either of the preceding claims, **characterized in that** the support disc (7) consists of a radially extending part (7A) and a separate wing component having two wings (7B, 7C).

4. Multiple disc clutch arrangement according to Claim 1 or 2, **characterized in that** the support disc (7) consists of a radially extending part (7A) and two separate wing components (7B, 7C) which are provided above and below the disc carrier (9).

5. Multiple disc clutch arrangement according to one of the preceding claims, **characterized in that** the disk packs are in contact with the support disc (7) via at least one shim (36).

6. Multiple disc clutch arrangement in the form of a triple disc clutch (1) according to one of the preceding claims, having a first, a second and a third friction clutch (K0, K1, K2) which have disc packs on disc carriers (9, 10, 11, 12), which disc packs are arranged radially offset from one another, having a first piston (13), a second piston (14) and a third piston (15) for actuating the first, second and third friction clutches (K0, K1, K2), wherein a first, a second and a third centrifugal oil compensation piston (16, 17, 18) forms together with the first, the second and the third piston (13, 14, 15), respectively, a respective centrifugal oil compensation chamber (21, 22, 23), wherein two of the clutches have a common support disc (7).

## Revendications

1. Agencement d'embrayage à disques multiples avec trois embrayages à friction (K1, K2, K0) présentant des paquets de disques agencés de manière décalée radialement les uns par rapport aux autres sur des supports de disques (9, 10, 11, 12), avec des pistons (13, 14, 15) pour actionner les embrayages à friction, une rondelle d'appui (7) étant agencée entre la sortie d'embrayage d'un embrayage (K1) et l'entrée d'embrayage d'un autre embrayage (K0), laquelle sert d'appui lors de l'actionnement d'au moins l'un des embrayages (K1, K2, K0),
**caractérisé en ce que**
la rondelle d'appui (7) est une pièce en tôle en au moins une partie et est constituée d'une partie s'étendant radialement (7A) et de deux ailettes (7B, 7C), chacune des ailettes (7A, 7B) s'appliquant contre le paquet de disques de l'un des embrayages (K1, K2, K0).

2. Agencement d'embrayage à disques multiples selon la revendication 1, **caractérisé en ce que** les ailettes (7B, 7C) de la rondelle d'appui (7) sont réalisées en forme de U ou en forme de L.

3. Agencement d'embrayage à disques multiples selon l'une quelconque des revendications précédentes, **caractérisé en ce que** la rondelle d'appui (7) est constituée d'une partie s'étendant radialement (7A) et d'un composant à ailettes séparé comportant deux ailettes (7B, 7C).

4. Agencement d'embrayage à disques multiples selon la revendication 1 ou 2, **caractérisé en ce que** la rondelle d'appui (7) est constituée d'une partie s'étendant radialement (7A) et de deux composants à ailettes séparés (7B, 7C) qui sont montés au-dessus et au-dessous du support de disques (9).

5. Agencement d'embrayage à disques multiples selon l'une quelconque des revendications précédentes, **caractérisé en ce que** les paquets de disques sont en contact avec la rondelle d'appui (7) par l'intermédiaire d'au moins une rondelle (36).

6. Agencement d'embrayage à disques multiples sous forme d'embrayage à trois disques (1) selon l'une quelconque des revendications précédentes, avec un premier, un deuxième et un troisième embrayage à friction (K0, K1, K2) qui présentent des paquets de disques agencés de manière décalée radialement les uns par rapport aux autres sur des supports de disques (9, 10, 11, 12), avec un premier piston (13), un deuxième piston (14) et un troisième piston (15) pour actionner les premier, deuxième et troisième embrayages à friction (K0, K1, K2), un premier, un deuxième et un troisième pistons de compensation d'huile centrifuge (16, 17, 18) formant conjointement avec le premier, le deuxième et le troisième pistons (13, 14, 15) respectivement des chambres de compensation d'huile centrifuge (21, 22, 23), deux des embrayages présentant une rondelle d'appui commune (7).
